# EUROPEAN PATENT APPLICATION

(11) **EP 2 615 475 A2**
(43) Date of publication of application: **17.07.2013**
(21) Application number: 13150165.2
(22) Date of filing: 03.01.2013
(51) Int. Cl.: G01T 1/17

(54) **Radiation sensor system**

(30) Priority: 03.01.2012 US 201261582772 P; 14.09.2012 US 201213620440
(71) Applicant: SCOSCHE INDUSTRIES, INC., Oxnard, CA 93033 (US)
(72) Inventor: Buchheim, Jimmy, Oxnard, CA California 93033 (US); Hennig, Arne, Oxnard, CA California 93033 (US)
(74) Representative: Fitchett, Stuart Paul

(57) **Abstract**

A radiation detector system includes a photosensor configured to detect a radiation level, a processor configured to process the radiation level, and a wireless interface configured to transmit the processed radiation level to a network. A method of determining a radiation value using the radiation detector includes receiving a new radiation event data, maintaining a record of the new radiation event data among a record of previously received radiation events data, calculating a user-configured average value radiation level based on the record of the radiation events data, calculating a radiation level on the basis of the record of the received new radiation event data and the record of previously received radiation events data, and outputting the radiation value and the user-configured average value radiation level.

## Description

### BACKGROUND

### Field

The present disclosure relates to radiation detection devices. More particularly, the disclosure relates to electromagnetic and/or particle radiation detection devices.

### Background

There are a variety of radiation sensors available today, including solid state sensors. These are semiconductors, which directly convert the incident radiation into electrical current, much as a proportional counter tube does, except that rather than gas, a material such as silicon is used. Other common materials are germanium, cadmium zinc telluride, etc.

Semiconductor radiation sensors consist of a *p-n* junction across which a pulse of current develops when a particle of ionizing radiation traverses it. In a different device, the absorption of ionizing radiation generates pairs of charge carriers (electrons and electron-deficient sites called holes) in a block of semiconducting material; the migration of these carriers under the influence of a voltage maintained between the opposite faces of the block constitutes a pulse of current. The pulses created in this way are amplified, recorded, and analyzed to determine the energy, number, or identity of the incident-charged particles. The sensitivity of these detectors is increased by operating them at low temperatures-commonly that of liquid nitrogen, -164 °C (-263 °F)-which suppresses the random formation of charge carriers by thermal vibration.

Applications may include flow monitoring in radiochemical synthesis (such as for diagnostic techniques in nuclear medicine using radioactive tracers with short-lived isotopes), monitoring of stack effluents, security monitoring and detection of illegal transportation and location of nuclear medicines, radiological dirty bombs, and weapons grade nuclear materials.

A major advantage of such sensors is their extremely high energy resolution. That is, they are very good at determining accurately what the energy of the incident radiation is. For many applications involving the detection of beta radiation (electrons), x-rays and gamma radiation (photons), performance may be superior to the conventional Geiger-Mueller tube with respect to signal output and noise. A disadvantage is cost, as the detectors themselves are quite expensive, as are the associated electronics required. There is a need in the art for a low cost radiation sensor. Operation at ambient temperature, and low power consumption is also preferable.

### SUMMARY

In an aspect of the disclosure, a radiation detector includes a photosensor configured to detect a radiation level, a processor configured to process the radiation level, wherein the processing includes one or more of a Kalman filter and a running average filter, and a wireless interface configured to transmit the processed radiation level to a network.

In an aspect of the disclosure, a radiation detector includes a photosensor configured to detect radiation, the photosensor comprising a voltage input having a rated voltage, and a power source configured to apply a voltage to the voltage input of the photosensor, wherein the applied voltage exceeds the rated voltage.

In an aspect of the disclosure, a radiation detector includes a photosensor configured to detect radiation, the photosensor having a voltage input, a housing supporting the photosensor, the housing further comprising an AC power plug configured to be removably connectable to an AC wall socket, and a converter configured to apply a voltage to the voltage input of the photosensor when the AC power plug is connected to the AC wall socket.

In an aspect of the disclosure, a method of determining a radiation value includes receiving a new radiation event data, maintaining a record of the new radiation event data among a record of previously received radiation events data, calculating a user-configured average value radiation level based on the record of the radiation events data, calculating a radiation level on the basis of the record of the received new radiation event data and the record of previously received radiation events data, and outputting the radiation value and the user-configured average value radiation level.

In an aspect of the disclosure, a radiation detector apparatus includes a means for detecting a radiation level, a means for processing the radiation level, wherein the processing means includes one or more of a Kalman filter and a running average filter, and a means for wirelessly transmitting the processed radiation level to a network.

In an aspect of the disclosure, a radiation detector apparatus includes a means for detecting a radiation level, a processing means comprising a filter, the processor being configured to process the detected radiation level using the filter, wherein the filter includes one or more of a Kalman filter and a running average filter.

In an aspect of the disclosure, a computer readable media including program instructions which when executed by a processor cause the processor to perform the method of receiving from a photosensor a signal descriptive of a level of radiation, processing the signal to calculate a radiation level, and transmitting the processed radiation level to a network via a wireless interface coupled to the processor.

### BRIEF DESCRIPTION OF THE DRAWINGS

FIG. 1 illustrates an exemplary radiation detector system, according to an embodiment.

FIG. 2 illustrates an exemplary processor with inputs and outputs used in an embodiment of a radiation detector system of FIG. 1.

FIG. 3 illustrates an exemplary housing supporting the radiation detector system, according to an embodiment.

FIG. 4 is a flowchart of a method of output selection process in an embodiment.

FIG. 5 illustrates exemplary user interfaces configured for use with embodiments of a radiation detector system, according to an embodiment.

FIG. 6 illustrates a local area map with radiation readings, according to an embodiment.

FIG. 7 illustrates a global area map with radiation readings, according to an embodiment.

### DETAILED DESCRIPTION

Various concepts will now be presented with reference to a radiation detector, such as a Geiger counter, a particle detector, and a photosensor. However, as those skilled in the art will readily appreciate, these concepts may be extended to other devices that detect particles or energy, regardless of the source and nature of the particles and energy. By way of example, various concepts presented throughout this disclosure may be extended to cameras, radar detectors, artificial eyes, medical devices (CT scanners), or any other suitable system having a requirement to detect particles and/or energy. Accordingly, any reference to a specific radiation detector is intended only to illustrate various aspects of the present disclosure, with the understanding that these concepts have a wide range of applications.

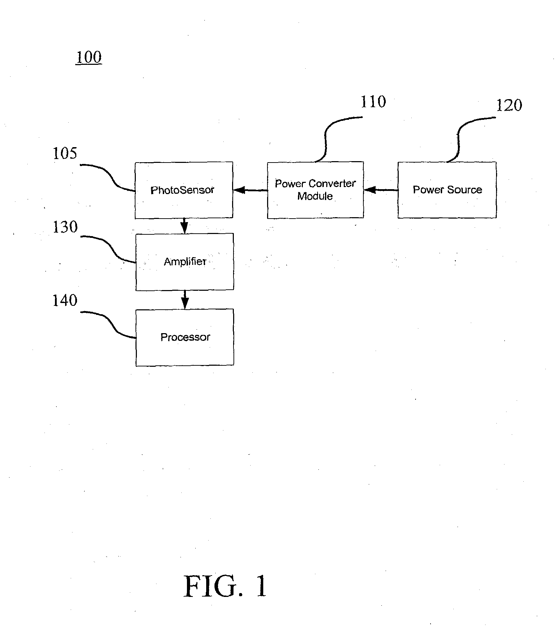

FIG. 1 illustrates an exemplary radiation detector system 100. In the embodiment shown in FIG. 1, a radiation detector system may include a photosensor 105, a power converter module 110, a power source 120, an amplifier 130, and a processor 140. The photosensor 105 may vary in accordance with the various embodiments of the disclosure. By way of illustration, the photosensor 105 may include analog or digital circuitry; the photosensor 105 may include a solid-state photosensor. The photosensor may include an array of solid-state radiation detecting sensors. The array may be arranged in a uniform grid. The system may be powered by a portable battery or from a fixed power source such as an A/C wall socket. The photosensor 105 may be calibrated to a radioactive isotope such as, for example, to Cesium-137 (Cs137), or Iodine-125 (I-125), or Cobalt-60 (Co60), or other isotopes. Such isotopes have a known half-life of decay rate with known decay products, and may be used as standards for calibration. Calibration is usually performed by a qualified radiation safety officer or an agency certified to perform calibration correctly. The process includes exposing the sensor to a radiation source of known activity at precisely measured distances. The reading is compared to the dose that is actually being given off by the source at each of the distances. The response must be within a known percentage (e.g., 10%) of the dose actually given off by the source at that distance in order to be considered calibrated. In some embodiments, the sensor may not be calibrated due to location or configuration of the sensor, in which case the detection is qualitative, not quantitative.

The sensitivity of the sensor may be measured at a radiation level, such as counts per minute (CPM), or at a dose rate, such as rads per hour (Rad/hr) or millirads per hour (mRad/hr). The photosensor 105 may detect any combination of energy or particles. For example, the sensor may be configured to detect electromagnetic radiation including high energy (short wavelength) photons, e.g., gamma radiation and x-rays. The photosensor 105 may detect particles including high energy particles such as alpha particles and beta particles. The photosensor 105 may be used to detect both electromagnetic radiation and particles. In addition, the photosensor 105 may be used to detect radiation in water and food. The photosensor 105 may be used to detect radiation at high elevation (such as on an airplane), medium elevation, low elevation, and underground. The photosensor 105 may also be used as detectors in a medical imaging procedure such as an X-ray or computed tomography (CT) scanning imaging. The photosensor 105 may be contained in a metallic enclosure that may serve as a radiation shield. For example, the shielding may protect electronic circuitry from radiation damage. The metallic enclosure may be fabricated from aluminum, tin or other similar materials. The photosensor 105 may output a wavelength, count, intensity, or similar measurement, and may also identify the type of radiation or particles. In an embodiment, the amplifier 130 increases the power of the signal from the photosensor 105. Processor 140 receives the amplified signal. In other embodiments, the amplifier 130 may be included with the photosensor 105 or the processor 140 to increase a signal-to-noise (S/N) ratio. The photosensor 105 may also output directly to the processor 140 without amplification. The radiation detector system 100 may also include an analog to digital converter (not shown). For example, the processor 140 may receive an analog signal and convert the signal to a digital signal in order that additional signal processing may be performed digitally, or to prepare the signal for digital transmission.

The radiation detector system 100 may include a power source 120 and power converter module 110 for applying a voltage to the photosensor 105. In an aspect, the photosensor 105 may include a voltage input having a rated voltage. The rated voltage may be a maximum rated voltage. The power source 120 and power converter module 110 may be configured to apply a voltage to the voltage input that exceeds the rated voltage. A portion of the input voltage is applied across the photosensor, which acts as a capacitor that charges up in response to the voltage. Ionizing radiation causes current to flow in an amount corresponding to the energy of the incident radiation.

Increasing the applied voltage, such as when the input voltage is raised above the rated voltage, reduces the capacitance of the photosensor 105. This capacitance reduction reduces noise in the photosensor 105, which increases the signal-to-noise ratio (SNR) of the photosensor 105. With a lower SNR, the photosensor 105, whether used in conjunction with the amplifier 130 or not, may detect pulses of ionizing radiation of lower energy, thus increasing its sensitivity. For example, the photosensor 105 may include a rated voltage of 50-60 volts, and the power source may apply a voltage of 70-90 volts. For example, the rated voltage may be lower or higher than the 50-60 volt range. In addition, the power source 120 and power converter module 110 may be configured to apply a voltage lower or higher than the 70-90 volt range. In other embodiments, the power converter module 110 may be included in the power source 120, or the power source 120 may be configured to apply a voltage to the photosensor 105 without the power converter module 110.

Reducing the capacitance of the photosensor 105 by increasing the applied voltage also increases the speed of the sensor. This has the effect of improving time resolution, i.e., the detection of individual radiation events.

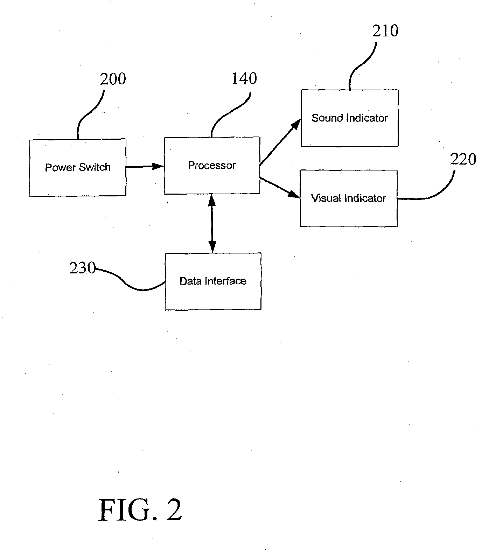

FIG. 2 illustrates an exemplary processor 140 used in the exemplary radiation sensor system of FIG. 1. The exemplary processor 140 configuration may include the processor 140, a power switch 200, a sound indicator 210, a visual indicator 220, and a data interface 230. The power switch 200 enables or disables the processor 140. A user of the system may use the power switch 200 to activate or deactivate the radiation detector system 100. The power switch 200 may also be coupled to other elements of the system (e.g., power source 120) to enable or disable the other elements of the system. The processor 140 activates either or both the sound indicator 210 and visual indicator 220 based on a count of the radiation. For example, the processor 140 may activate the sound indicator 210 or visual indicator 220 when the level of the radiation exceeds a threshold. The processor 140 may activate the sound indicator 210 or visual indicator 220 to reflect the radiation level. Thus, an output level from the sound indicator 210 or visual indicator 220 may correspond to the radiation level. In such an embodiment, the radiation detector system 100 may act as a dosimeter where the audible signal assists and alerts the user, who may be required to focus visual attention on the environment being inspected.

In an embodiment, the radiation detector system 100 may also send data to an external device, such as a remote data collection receiver. The collection receiver may receive the data from a plurality of radiation detector systems 100 in separate locations to construct a map of radiation levels.

In other embodiments, the visual indicator 220 may be an on/off light to indicate when the processor 140 is active. The sound indicator 210 may be, for example, an alarm, a buzzer, or a speaker. The visual indicator 220 may be, for example, a light such as a light emitting diode (LED), a dial, or a digital display.

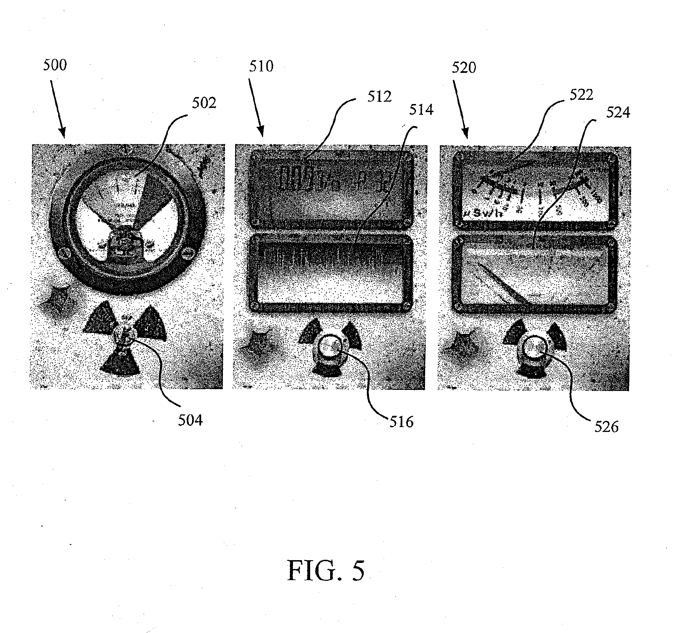

The processor 140 may be coupled to a data interface 230. For data output, the processor 140 may output raw or processed data. Raw or processed data may be sent to displays included in the device, such as the visual indicator 220. The displays may display or otherwise represent the raw or processed data (see FIG. 5). The processor 140 may also receive input through the data interface 230, such as user configuration data. This configuration data may be used to configure various aspects of the processor, such as the output and control of the sound indicator 210 and visual indicator 220, or other outputs. The radiation sensor system 100 may be configured to operate with a separate user device, or as a stand alone device.

The data interface 230 may be coupled to a wireless data interface (not shown). In addition, the data interface 230 may include a wireless data interface. In an embodiment, the radiation detector system 100 may send data through the wireless data interface based on a level of the radiation. For example, the radiation detector system 100 may be configured to send a message, such as an email or a user datagram, to a network device such as a server or database based on the radiation level. The email or user datagram message may warn the user that the radiation level exceeds a threshold or is increasing. The radiation detector system 100 may be configured to send a message at predetermined intervals, such as once a day or multiple times a day. The radiation level data may include a location, such as provided by a global position system (GPS), such that the radiation level data may be associated with the location. When data is sent to the network device, the data may be stored or used in real time. A local, regional, or global map of radiation level and other photosensor data may be generated based on data from a plurality of radiation detector systems 100 using any combination of real time data and historical data. In a further embodiment, the radiation detector system 100 may be configured to send data continuously to the network device and receive data from other devices. The wireless data interface may be, for example, a Wi-Fi interface including the IEEE 802.11 interface, although other wireless interfaces may be used.

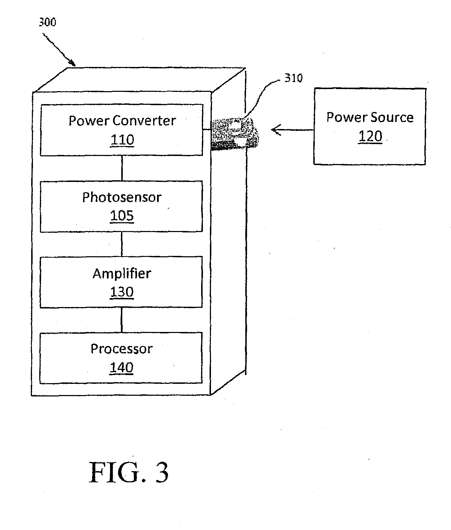

FIG. 3 illustrates an exemplary housing 300 supporting the radiation detector system 100 of FIG. 1. The housing 300 may be coupled to the radiation detector system 100 using any combination of fasteners or other suitable mounting elements. The housing 300 may include an AC power plug 310 to be inserted into an AC wall socket. The AC power plug 310 may also be removed from the AC wall socket, for example, when not in use or to disable the radiation detector system 100. In a further embodiment, the AC power plug may be coupled to the power source 120 which may be external to the detector system, and may couple the power source 120 to the power switch 200. When the AC power plug 310 is connected to the AC wall socket, and the power switch 200 is in an operative mode, a voltage is applied to the radiation detector system 100.

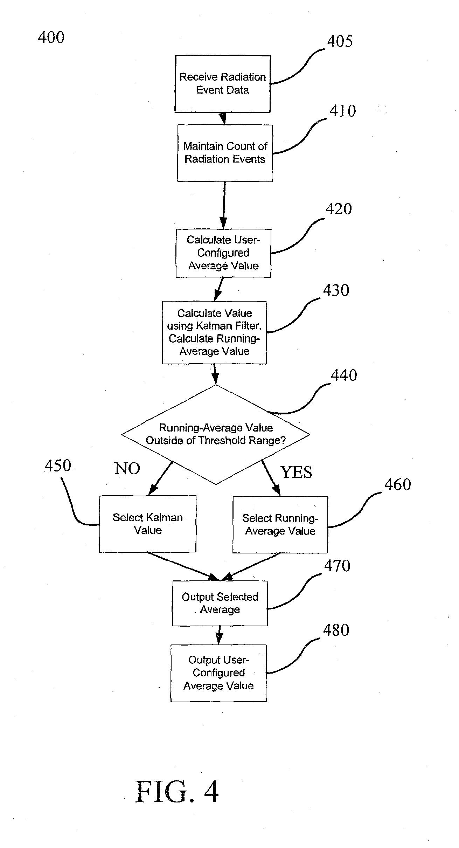

FIG. 4 is a flowchart of a method of output selection 400, used with the exemplary radiation detector system 100 of FIG. 1. The process begins by receiving radiation data (block 405). The radiation data may be derived from the output of the photosensor 105 or data processed by the processor 140 on the basis of the output from the photosensor 105. Next, at block 410, the process maintains a record of radiation level data in a memory that may be included in the processor. Next, at 420, a user-configured average value radiation level is calculated. The user-configured average value may be a running-average over a user-defined time window, and may adjust the time window to meet the needs of a particular application. A user may configure the process to calculate an average for a 10 second window or a 1 minute window. Other time windows may be user-defined to calculate an average. The process may also calculate the user-configured average value of the radiation level based on the user-defined time window. Next, at 430, the process calculates a radiation level using a Kalman filter and also calculates a running-average value. The Kalman filter is an algorithm which operates recursively on streams of noisy input data to produce a statistically optimal estimate of the radiation level. Next, at 440, the process determines whether the running-average value is outside of a threshold range. The threshold range may be configured by the user or may be a default range based on a calibration of the radiation detector system 100. As an example, the threshold range may output the running-average when the Kalman filter value is likely to be unreliable. If the running-average value is outside the threshold range, the process selects the Kalman filter value (block 450); otherwise, the process selects the running-average value (block 460). The process then outputs the selected value of the Kalman filter or the running-average, and may also output the user-configured average value. One skilled in the art will recognize that the Kalman filter may vary with the various embodiments of the disclosure. For example, the Kalman filter may produce estimates of the true values of the radiation measurements and their associated calculated values by predicting a value, estimating the uncertainty of the predicted value, and computing a weighted average of the predicted value and the measured value. The most weight is given to the value with the least uncertainty. Other calculated values of the radiation count may be determined using any suitable method. The process may be configured to calculate and output an instantaneous value of the radiation count.

FIG. 5 illustrates exemplary user interfaces for the radiation detector system 100. The processor 140 of FIG. 1 may be configured to send data to a user device with user interfaces 500, 510, 520 for displaying the radiation data. Exemplary user interfaces 500, 510, 520 include graphical user interface elements for displaying the radiation count and data. A first user interface 500 includes a display gauge 502 and an on/off toggle switch 504. The display gauge 502 may show the radiation count in a dial layout with three discrete zones of radiation counts. A second user interface 510 includes a digital gauge 512, a scope gauge 514, and an on/off switch 516. The on/off switch 516 (e.g., a knob) enables or disables the digital gauge 512 and scope gauge 514. The digital gauge 512 shows the radiation count in a digital format for ease of use, along with a scope gauge 514 to show a running radiation count and trends. A third user interface 520 includes a first dial gauge 522 and a second dial gauge 524. The on/off switch 526 enables or disables the first dial gauge 522 and second dial gauge 524. The first dial gauge 522 may show the radiation count in, for example, microSievers/hr (uSv/hr) while the second dial gauge 524 may show the radiation count in counts per second (CPS). The user interfaces may vary with the various embodiments of the disclosure.

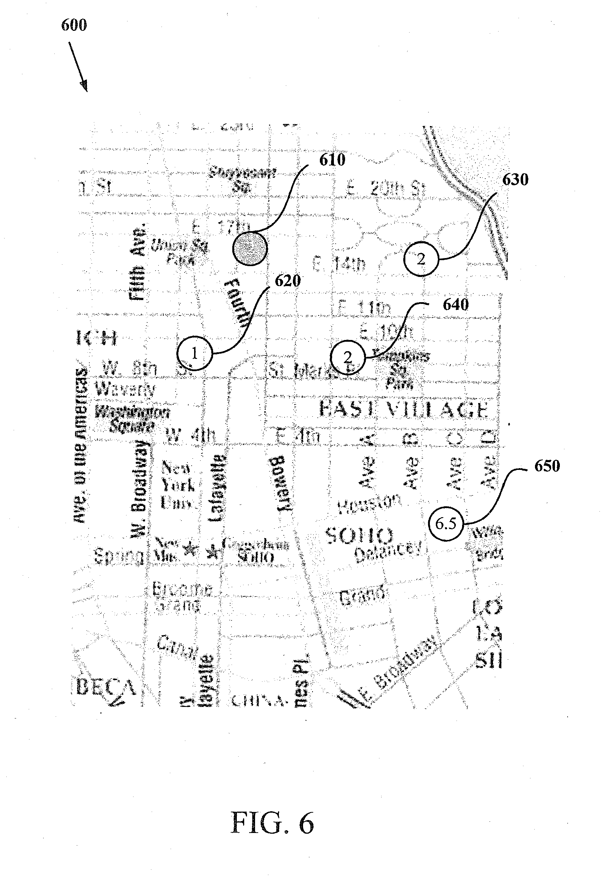

FIG. 6 illustrates a local area map with radiation readings. The number markers 610, 620, 630, 640, 650 may indicate radiation count levels. The number markers 610, 620, 630, 640, 650 may alternatively indicate absolute average radiation counts or a scaled value. In an embodiment, the number markers 620, 630, 640, 650 may correspond to historical readings at different locations, while number marker 610 may be a current location reading. Number markers 620, 630, 640, 650 may also correspond to current readings of other users at different locations, while number marker 610 may be a current location reading. The number markers may be any combination of historical or current radiation readings. Those skilled in the art will also recognize that the local area map is for illustration purposes only, and the embodiments are not so limited.

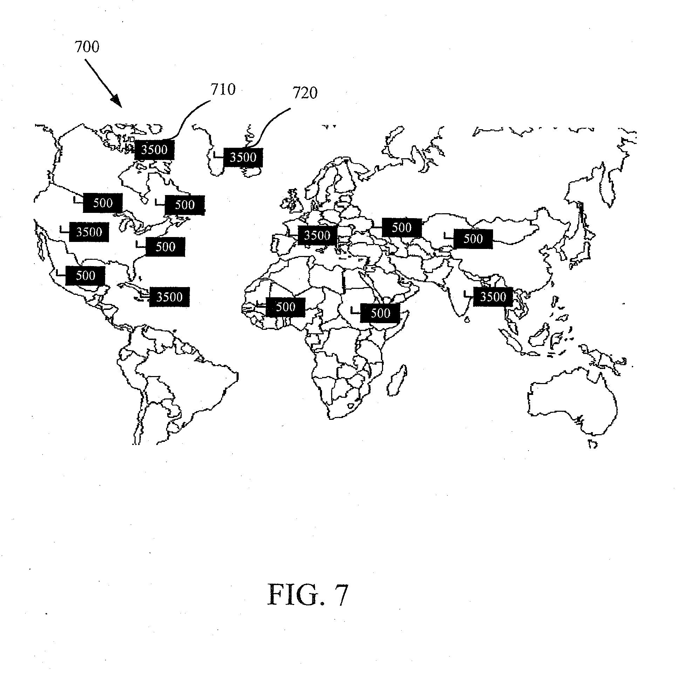

FIG. 7 illustrates a global area map with radiation readings according to an embodiment. Markers 710, 720 may indicate radiation count levels at indicated locations. The number markers 710, 720 may indicate absolute average radiation counts or a scaled value. In an aspect, the number marker 720 may correspond to historical readings at a different location, while number marker 710 is a current location reading. In another aspect, the number marker 720 may correspond to a current reading of other users at a different location, while number marker 710 is a current location reading. The number markers may be any combination of historical or current radiation readings. Those skilled in the art will also recognize that the local area map is for illustration purposes only, and the embodiments are not so limited.

In accordance with various aspects of the disclosure, an element, or any portion of an element, or any combination of elements may be implemented with a "processing system" that includes one or more processors. Examples of processors include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise. The software may reside on a computer-readable medium. The computer-readable medium may be a non-transitory computer-readable medium. A non-transitory computer-readable medium includes, by way of example, a magnetic storage device (e.g., hard disk, floppy disk, magnetic strip), an optical disk (e.g., compact disk (CD), digital versatile disk (DVD)), a smart card, a flash memory device (e.g., card, stick, key drive), random access memory (RAM), read only memory (ROM), programmable ROM (PROM), erasable PROM (EPROM), electrically erasable PROM (EEPROM), a register, a removable disk, and any other suitable medium for storing software and/or instructions that may be accessed and read by a computer. The computer-readable medium may also include, by way of example, a carrier wave, a transmission line, and any other suitable medium for transmitting software and/or instructions that may be accessed and read by a computer. The computer-readable medium may be resident in the processing system, external to the processing system, or distributed across multiple entities including the processing system. The computer-readable medium may be embodied in a computer-program product. By way of example, a computer-program product may include a computer-readable medium in packaging materials. Those skilled in the art will recognize how best to implement the described functionality presented throughout this disclosure depending on the particular application and the overall design constraints imposed on the overall system.

It is to be understood that the specific order or hierarchy of steps in the methods and processes disclosed is an illustration of exemplary processes. Based upon design preferences, it is understood that the specific order or hierarchy of steps in the methods may be rearranged.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language of the claims, wherein reference to an element in the singular is not intended to mean "one and only one" unless specifically so stated, but rather "one or more."

Other inventive aspects of the embodiments hereinbefore described and disclosed are defined by the following clauses.
1. A radiation detector apparatus comprising:
   a photosensor configured to detect radiation, the photosensor comprising a voltage input having a rated voltage; and
   a power source configured to apply a voltage to the voltage input of the photosensor, wherein the applied voltage exceeds the rated voltage.
2. The apparatus of clause 1, wherein the applied voltage is 70 volts and the rated voltage is 50 volts.
3. The apparatus of clause 1 or 2, wherein the applied voltage is 90 volts and the rated voltage is 60 volts.
4. The apparatus of clause 1, 2 or 3, wherein when the applied voltage exceeds the rated voltage, a signal-to-noise ratio of the detected radiation is increased.
5. A method of determining a radiation value comprising:
   receiving a new radiation event data;
   maintaining a record of the new radiation event data among a record of previously received radiation events data;
   calculating a user-configured average value radiation level based on the record of the radiation events data;
   calculating a radiation level on the basis of the record of the received new radiation event data and the record of previously received radiation events data; and
   outputting the radiation value and the user-configured average value radiation level.
6. The method of clause 5, further comprising:
   calculating a radiation level on the basis of the record of the received new radiation event data and the record of previously received radiation events data using a Kalman filter calculation value and a running average calculation value;
   determining if the radiation level running average value is outside of a threshold range;
   selecting the Kalman filter calculation radiation value if the radiation level running average is outside of the threshold range; and
   selecting the running average radiation value if the radiation level running average is within a threshold range.
7. A radiation detector apparatus comprising:
   a means for detecting a radiation level, the means comprising a voltage input having a rated voltage; and
   a means for applying a voltage to the voltage input of the radiation detection level means, wherein the applied voltage exceeds the rated voltage.
8. A radiation detector apparatus comprising:
   a means for detecting a radiation level; and
   a processing means comprising a filter, wherein the filter includes one or more of a Kalman filter and a running average filter the processor being configured to process the detected radiation level using the filter.
9. A computer readable media including program instructions which when executed by a processor cause the processor to perform the method comprising:
   receiving from a photosensor a signal descriptive of a level of radiation;
   processing the signal to calculate a radiation level, wherein the processing includes one or more of a Kalman filter and a running average filter; and
   transmitting the processed radiation level to a network via a wireless interface coupled to the processor.

## Claims

1. A radiation detector apparatus comprising:
a means for detecting a radiation level; and
a processor comprising a filter, the processor being configured to process the detected radiation level using the filter.

2. The apparatus of Claim 1, wherein the filter comprises a Kalman filter.

3. The apparatus of Claim 1, wherein the filter comprises a running-average filter.

4. The apparatus of Claim 1, wherein the processor comprises a Kalman filter and a running-average filter.

5. The apparatus of any preceding claim, wherein the processor is further configured to select said one of the filters based on a threshold radiation level.

6. The apparatus of any preceding claim, wherein the processor further comprises a user configured filter configured to provide an output corresponding to the detected radiation level in response to an output from the selected one of the filters.

7. The apparatus of any preceding claim, further comprising a wireless interface configured to transmit the processed radiation level to a network.

8. The apparatus of Claim 7, wherein the processor is configured to transmit via the wireless interface communication device a trigger in response to the radiation level exceeding a threshold.

9. The apparatus of any preceding claim, wherein the radiation comprises at least one of gamma radiation events, beta radiation events, and x-ray events.

10. The apparatus of any preceding claim, further comprising a switch configured to enable and disable the processor.

11. The apparatus of any preceding claim, further comprising an alert generation device coupled to the processor, wherein the processor generates an alert in response to the radiation level exceeding a threshold.

12. The apparatus of any preceding claim, further comprising a display device coupled to the processor.

13. The apparatus of any preceding claim, wherein the means for detecting a radiation level is further configured to detect a plurality of radiation events in at least one of a liquid, a comestible, a vehicle, or at high elevation.

14. The apparatus of any preceding claim, wherein the means for detecting a radiation level comprises a solid-state sensor.

15. The apparatus of Claim 14, wherein the solid-state sensor further comprises an array of radiation detecting sensors.

16. The apparatus of any preceding claim, further comprising a geographic position locator.

17. The apparatus of Claim 16, wherein the geographic position locator is at least one of a satellite based global positioning system and a receiver triangulation system.

18. The apparatus of any preceding claim, wherein the means for detecting a radiation level is a photosensor configured to detect a radiation level.

19. The apparatus of any preceding claim, wherein the means for detecting a radiation level comprises a voltage input having a rated voltage, the apparatus further comprising:
a means for applying a voltage to the voltage input of the radiation detection level means, wherein the applied voltage exceeds the rated voltage.

20. The apparatus of Claim 19, wherein when the applied voltage exceeds the rated voltage, a signal-to-noise ratio of the detected radiation is increased.

21. The apparatus of Claim 18, wherein the photosensor has a voltage input, the apparatus further comprising:
a housing supporting the photosensor, the housing further comprising an AC power plug configured to be removably connectable to an AC wall socket; and
a converter configured to apply a voltage to the voltage input of the photosensor when the AC power plug is connected to the AC wall socket.
